**Europäisches Patentamt**

**European Patent Office**

**Office européen des brevets**

(11) Veröffentlichungsnummer: **0 098 322**
**A1**

(12) **EUROPÄISCHE PATENTANMELDUNG**

(21) Anmeldenummer: **82106081.1**

(22) Anmeldetag: **07.07.82**

(51) Int. Cl.³: **B 65 D 25/16,** B 65 D 88/62,
B 67 D 1/04, B 31 B 39/40

(43) Veröffentlichungstag der Anmeldung: **18.01.84**
**Patentblatt 84/3**

(71) Anmelder: **BIER-DRIVE AG, Werkstrasse 2,**
**CH-7000 Chur (CH)**

(72) Erfinder: **Möckesch, Erich, Alexanderstrasse 64,**
**CH-7100 Heilbronn (CH)**
Erfinder: **Noack, Hans-Herbert, Schwalbenstrasse 54,**
**CH-7110 Öhringen (CH)**

(74) Vertreter: **Schmidt-Evers, Jürgen et al, Patentanwälte**
**Dipl.-Ing. H. Mitscherlich Dipl.-Ing. K. Gunschmann**
**Dr.rer.nat. W. Körber Dipl.-Ing. J. Schmidt-Evers**
**Steindorfstrasse 10, D-8000 München 22 (DE)**

(84) Benannte Vertragsstaaten: **AT BE CH DE FR GB IT LI LU**
**NL SE**

(54) **Foliensack.**

(57) Ein in einem vorzugsweise kugelförmigen Drucktank anzuordnender doppelwandiger oder vierfachwandiger Foliensack (8) zur Aufnahme einer Flüssigkeit, insbesondere von Bier, besteht aus flachen aufeinandergelegten kreisförmigen oder polygonalen Folienstücken (2a–2c), die am Rande miteinander verschweißt sind. Die die eine Foliensack-Hälfte (8a, 8b) bildenden Folienstücke sind im mittleren Bereich mit einem sie durchgreifenden Anschlußstutzen (5) versehen. Die die doppelte oder vierfache Wandung bildenden Folienstücke werden vorzugsweise aus einem flachgelegten handelsüblich verfügbaren Folienschlauch ausgeschnitten. Zur Prüfung des fertigen Foliensackes auf Dichtheit wird nur ein nächst der Schweißnaht (6) verlaufender ringförmiger Randbereich aufgeblasen, der mit einem den Anschlußstutzen (5) umgebenden zentralen Bereich über einen Verbindungskanal verbunden ist. Der in eine Hülle einzubringende Foliensack (8) wird zuvor schirmartig so gefaltet, daß die den Anschlußstutzen (5) nicht enthaltende Foliensack-Hälfte (8b) in die den Anschlußstutzen (5) enthaltende Foliensack-Hälfte (8a) eingelegt wird.

7. Juli 1982

Foliensack

Die Erfindung betrifft einen Foliensack, vorzugsweise aus Kunststoff, für die Aufnahme einer Flüssigkeit, insbesondere Bier, innerhalb eines Drucktanks.

Kohlensäurehaltige Getränke, inbesondere Bier, wurden früher und werden auch heute teilweise noch vom Hersteller in Fässern abgefüllt und dann ausgeliefert. Am Ort des Verbrauchs werden die Fässer angezapft und, nachdem sie geleert worden sind, an den Hersteller zurückgeliefert. Dieser reinigt die Fässer und füllt sie erneut. Der Transport der Fässer und das Reinigen sind jedoch aufwendig und teuer. Außerdem erfolgt das Reinigen nicht immer in dem gewünschten Maße, so daß die insbesondere für die Haltbarkeit und Qualität von Bier erforderliche Sterilität der Fässer nicht gewährleistet ist.

Gemäß dem deutschen Patent 27 36 272 wurde deshalb ein Abfüllverfahren eingeführt, bei welchem an den Verbrauchsorten, beispielsweise in den Kellern von Gastwirtschaften, ortfest vorzugsweise kugelförmige Drucktanks aufgestellt werden. Das kohlensäurehaltige Getränk wird vom Hersteller mittels Tankwagen angefahren und in die Drucktanks gefüllt. Damit das kohlensäurehaltige Getränk jedoch nicht mit der Innenwandung der Drucktanks in Berührung kommt, wird in jeden Drucktank vor jeder Füllung ein Foliensack eingelegt, in den die Flüssigkeit über eine Armatur und einen an dem Foliensack vorgesehenen Einfüllstutzen eingeleitet wird. Der Foliensack ist zunächst zusammengefaltet und von einer Hülle umgeben, die im oberen Bereich des Drucktanks aufgehängt ist. Das Einfüllen des Getränks in den Foliensack erfolgt von unten, wobei sich der Foliensack sukzessive aus der Hülle herauszieht. Auf diese Weise wird verhindert, daß sich der Foliensack in Falten gegen die Drucktank-Wandung legt und das Gewicht der Flüssigkeit ein Entfalten verhindert. Dadurch, daß man dann auf die Außenseite des Foliensackes, d.h. den zwischen dem Folienraum und der Innenwand des Drucktanks befindlichen Raum ein Druckgas einwirken läßt, kann der Foliensack zwecks Zapfens des kohlensäurehaltigen Getränkes wieder entleert werden, wobei durch Druckregulierung des Druckgases ein Zapfen mit gleichbleibendem Druck unabhängig vom Füllgrad des Füllsackes möglich ist.

Das vorstehend beschriebene Verfahren hat sich außerordentlich gut bewährt und tritt zunehmend an die Stelle der früher verwendeten Fässer. Für jede Neufüllung des Drucktanks muß der Foliensack gewechselt werden. Bisher werden Foliensäcke verwendet (DE-OS 29 02 2o 291), die zwecks weitestgehender Anpassung an die Kugelform des Drucktanks aus drei Teilen zusammengeschweißt werden, und zwar aus einem zylinderförmigen Mittelabschnitt und zwei schalenförmigen Endabschnitten. Der zylinderförmige Mittelabschnitt wird aus einem flachen rechteckigen Folienstück durch

0098322

entsprechendes Zusammenlegen und Verschweißen der Stirnkanten hergestellt. Dies ist noch relativ einfach. Weniger einfach ist dagegen die Herstellung der schalenförmigen Endabschnitte. Diese können nur in eigens dafür hergestellten Formpressen gefertigt werden. Um die unbedingt notwendige Dichtheit zu gewährleisten, wird der Foliensack doppelwandig oder sogar vierfachwandig ausgeführt. Der Einzelstutzen durchgreift einen der beiden schalenförmigen Endabschnitte. Die Prüfung auf Dichtheit erfolgt bisher dadurch, daß der Foliensack mit Luft aufgeblasen und eine bestimmte Zeit lang im aufgeblasenen Zustand gehalten wird, um einen insbesondere durchUndichtigkeiten an den Schweißnähten eintretenden Druckabfall feststellen zu können. Zum Einführen eines Foliensackes in eine Hülle wird der Foliensack zunächst zusammengefaltet, und dann wird sein dem Einzelstutzen gegenüberliegendes Ende umgeknickt und gegen den Mittelabschnitt gelegt. Dadurch ergibt sich im Bereich dieses umgelegten Endabschnittes eine Verdickung gegenüber dem übrigen Bereich, die bisweilen ein kontinuierliches Austreten des Foliensackes aus der Hülle behindert.

Der Erfindung liegt in erster Linie die Aufgabe zugrunde, einen Foliensack der eingangs beschriebenen Art einfacher und daher billiger zu gestalten.

Die Aufgabe ist dadurch gelöst, daß der Foliensack aus mindestens zwei flachen scheibenförmigen Folienstücken besteht, die am Rand vorzugsweise durch Schweißen miteinander verbunden sind.

Ein doppelwandiger Foliensack kann in Anwendung des grundsätzlichen Erfindungsgedankens aus vier flachen

0098322

scheibenförmigen Folienstücken bestehen, die am Rand vorzugsweise durch Schweißen miteinander verbunden sind. Ein vierfachwandiger Foliensack muß dementsprechend aus acht scheibenförmigen Folienstücken bestehen.

Insbesondere dann, wenn der Foliensack in einen kugelförmigen Drucktank eingesetzt werden soll, ist es zweckmäßig, die scheibenförmigen Folienstücke kreisrund oder polygonförmig zu machen. Polygonförmige Folienstücke lassen sich wegen ihrer geraden Kanten einfacher ausschneiden. Auch kann eine einfachere Schweißvorrichtung für polygonförmige Folienstücke verwendet werden, mit der die geraden Kanten nacheinander verschweißt werden können.

Um die Flüssigkeit in den Foliensack einführen und aus dem Foliensack entnehmen zu können, kann, wie bekannt, der Foliensack mit einem die Wandung durchgreifenden Anschlußstutzen versehen sein. Im vorliegenden Fall ist es zweckmäßig, den Anschlußstutzen etwa in der Mitte oder im mittleren Bereich des einen Folienstückes bzw. der zur Bildung der einen Foliensackhälfte zusammengehörenden Folienstücke anzuordnen. Bei kreisrunden Folienstücken sollte der Anschlußstutzen zweckmäßigerweise im Zentrum der Folienstücke vorgesehen werden.

Die Erfindung betrifft ferner ein Verfahren zur Herstellung eines Foliensackes der vorstehend beschriebenen Art, das sich besonders für doppelwandige und vierfachwandige Foliensäcke eignet. Zur Herstellung doppelwandiger Foliensäcke können die zwei je eine Foliensack-Hälfte bildenden flachen scheibenförmigen Folienstücke aus einem handelsmäßig verfügbaren, flachgelegten Folienschlauch ausgeschnitten bzw. ausgestanzt werden, dann können die zwei die andere Foliensack-Hälfte bildenden auf die gleiche Weise gewonnenen flachen scheibenförmigen Folienstücke auf die erstgenannten Folienstücke aufgelegt werden, und schließlich können die übereinander liegenden Folienstücke am Rande verschweißt werden. Für vierfachwandige Foliensäcke werden die vier je eine Foliensack-Hälfte bildenden Folienstücke aus zwei übereinandergelegten Folienschläuchen ausgestanzt und mit den auf gleiche Weise gewonnenen vier weiteren Folienstücken verschweißt.

Zur Herstellung des vorstehend beschriebenen doppelwandigen Foliensackes für einen kugeförmigen Drucktank können folgende Schritte vorgesehen sein:

a) zunächst wird von einem Folienspeicher, vorzugsweise einer Rolle, auf der eine Einzelfolie, eine Doppelfolie oder ein flachgelegter Folienschlauch aufgewickelt ist, zweifach übereinandergelegter Abschnitt der Einzelfolie oder ein Abschnitt der Doppelfolie oder des Folienschlauches abgezogen.

b) dann wird im mittleren Bereich des abgezogenen Abschnittes ein Loch vorzugsweise durch Stanzen eingebracht.

c) dann wird der Anschlußstutzen am Lochbereich des abgezogenen Abschnittes befestigt,

d) nach Schritt a), b) oder c) oder gleichzeitig mit Schritt b) oder c) wird der abgezogene Abschnitt abgetrennt,

e) dann wird unter Wiederholung von Schritt a) ein weiterer Abschnitt von dem Folienspeicher bzw. der Rolle abgezogen,

f) dann wird dieser weitere abgezogene Abschnitt mit dem bereits vorher abgezogenen Abschnitt entlang einer den Umfang der flachen scheibenförmigen Folienstücke definierenden geschlossenen Kreiskurve verschweißt,

g) gleichzeitig oder danach werden die flachen scheibenförmigen Folienstücke aus den abgezogenen Abschnitten durch einen nächst der Schweißlinie verlaufenden Schnitt herausgeschnitten.

Das zuletzt beschriebene Verfahren kann vorteilhafterweise noch dadurch ergänzt werden, daß nach Schritt e) oder f) oder g) oder gleichzeitig mit Schritt f) oder g) der weitere abgezogene Abschnitt abgetrennt wird.

Zur Herstellung eines vierfachwandigen Foliensackes für einen kugelförmigen Drucktank können folgende Schritte vorgesehen sein:

a) zunächst wird von einem Folienschlauch, vorzugsweise einer Rolle, auf der eine Einzelfolie, eine Doppelfolie, ein Folienschlauch oder eine Vierfachfolie aufgewickelt ist, ein vierfach übereinandergelegter Abschnitt der Einzelfolie, ein zweifach übereinandergelegter Abschnitt der Doppelfolie oder des Folienschlauches oder ein Abschnitt der Vierfachfolie abgezogen,

b) dann wird im mittleren Bereich des abgezogenen Abschnittes ein Loch vorzugsweise durch Stanzen eingebracht,

c) dann wird der Anschlußstutzen am Lochbereich des abgezogenen Abschnittes befestigt,

d) nach Schritt a), b) oder c) oder gleichzeitig mit Schritt b) oder c) wird der abgezogene Abschnitt abgetrennt,

e) dann wird unterWiederholung von Schritt a) ein weiterer Abschnitt von dem Folienspeicher bzw. der Rolle abgezogen,

f) dann wird dieser weitere abgezogene Abschnitt mit dem bereits vorher abgezogenen Abschnitt entlang einer den Umfang der flachen scheibenförmigen Folienstücke definierenden geschlossenen Kreiskurve verschweißt,

g) gleichzeitig oder danach werden die flachen scheibenförmigen Folienstücke aus den abgezogenen Abschnitten durcheinen nächst der Schweißlinie verlaufenden Schnitt herausgeschnitten.

Ferner kann das Herstellungsverfahren eine Prüfung des fertigen Foliensackes auf seine Dichtigkeit umfassen. Um Zeit zu sparen, die für das bisher angewendete vollständige Aufblasen des fertigen Foliensackes erforderlich ist, wird nunmehr vorgeschlagen, den Foliensack nur an seinem nächst der Schweißnaht verlaufenden ringförmigen Randbereich mit Druckluft aufzublasen. Diesem Gedanken wird selbständige erfinderische Bedeutung beigemessen. Er ist auch anwendbar auf Foliensäcke der herkömmlichen Art. Das Aufblasen nur des Randbereiches kann dadurch erreicht werden, daß der mittlere Bereich des Foliensackes bis auf mindestens einen von dem etwa in der Mitte gelegenen Anschlußstutzen zu dem ringförmigen Randbereich verlaufenden kanalartigen Verbindungsbereich während des Aufblasens zusammengepreßt wird.

In Ergänzung des vorstehend geschilderten Herstellungsverfahrens wird ferner vorgeschlagen, daß der druckgeprüfte Foliensack im leeren Zustand schirmartig gefaltet wird, wobei die nicht mit dem Anschlußstutzen versehene Foliensack-Hälfte in die mit dem Anschlußstutzen versehene Foliensack-Hälfte eingelegt wird, und daß der so zusammengelegte Foliensack in eine schlauchförmige Hülle eingeführt wird. Diesen Gedanken wird ebenfalls selbständige erfinderische Bedeutung beigemessen. Er ist mit dem Vorteil verbunden, daß der zusammengefaltete Foliensack nunmehr überall gleich dick ist und somit ein gleichmäßiges Austreten des Foliensackes aus der Hülle beim Füllen des Foliensackes mit Sicherheit gewährleistet werden kann.

Die Erfindung wird nachfolgend anhand der Zeichnungen beschrieben.

Es zeigen:

Figuren 1 bis 3 drei aufeinanderfolgende Stufen bei der Herstellung eines doppelwandigen Foliensackes;

Figur 4 eine Ansicht von unten auf den leeren flachen ausgeschnittenen und verschweißten Foliensack, bestehend aus kreisrunden Folienstücken;

Figur 4a eine Ansicht wie Figur 4, wobei jedoch der Foliensack aus sechseckigen Folienstücken besteht;

Figur 5 eine Seitenansicht des aufgeblähten Foliensackes;

0098322

Figur 6 einen Schnitt durch den aufgeblähten Foliensack;

Figur 7 einen Schnitt durch den zusammengefalteten
        und von einer Hülle  umgebenen Foliensack;

Figur 8 eine Ansicht von oben auf den zwecks Prüfung
        der Dichtheit der Schweißnaht in einem ring-
        förmigen Randbereich aufgeblähten Folien-
        sack;

Figur 9 einen Schnitt IX-IX durch Figur 8 mit einer
        Vorrichtung zum Prüfen der Dichtheit;

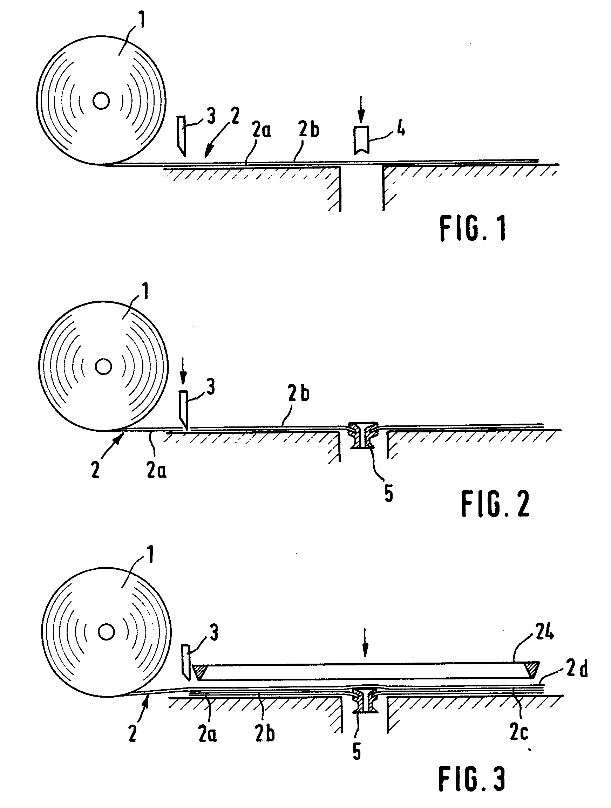

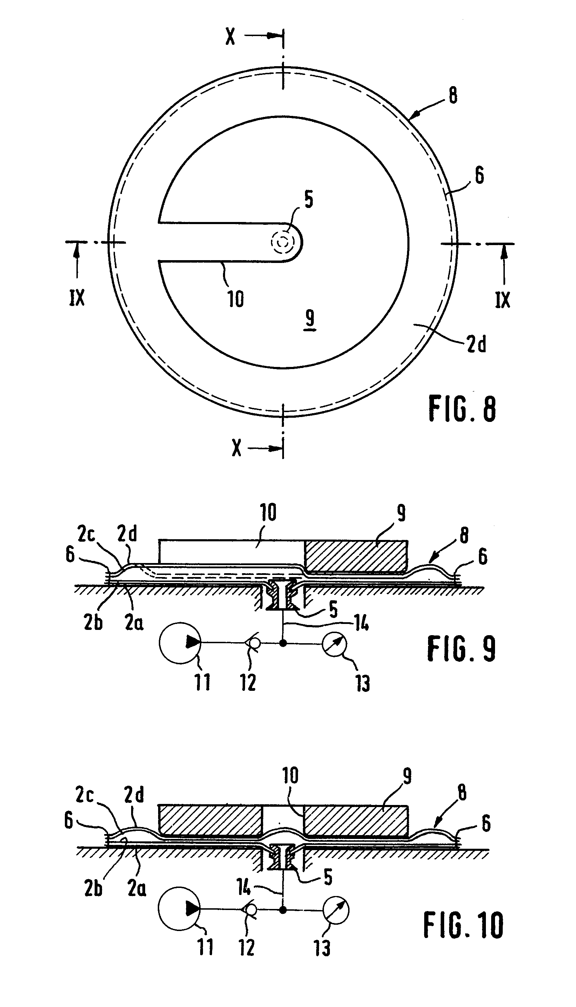

Figur 1o einen Schnitt X-X durch Figur 8 mit der Anordnung zur Prüfung der Dichtheit;

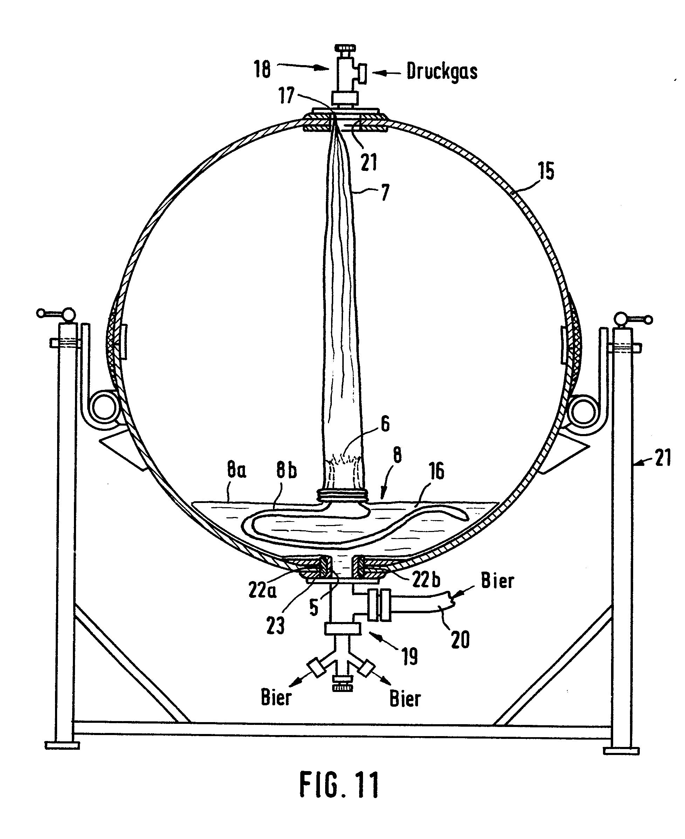

Figur 11 einen Schnitt durch einen kugelförmigen
        Drucktank mit eingehängtem Foliensack, der
        teilweise mit Flüssigkeit gefüllt und aus
        der Hülle herausgezogen ist.

Figur 11 zeigt einen kugelförmigen Drucktank 15, der auf einem Gestellt 21 um eine horizontale Achse drehbar angeordnet ist. Der Drucktank 15 ist oben mit einer Öffnung 21 und unten mit einer Öffnung 23 versehen. Die Öffnung 21 ist mit einer Armatur 18 zum Einleiten von Druckgas verschlossen. Die Öffnung 23 ist mit einer Armatur 19 zum Einfüllen von Bier sowie zum Entleeren versehen. Das Bier wird über eine Leitung 2o in die Armatur 19 eingeführt.

In die Öffnung 23 ist ein Anschlußstutzen 5 eingesetzt, der das offene Ende eines Foliensackes 8 bildet, welcher, wie noch erläutert wird, aus zwei Foliensack-Hälften 8a,8b besteht, die durch eine Schweißnaht 6 miteinander verbunden sind. Der Foliensack 8 ist doppelwandig, was in Figur 11 nicht erkennbar ist. Der Anschlußstutzen 5 ist in der Öffnung 23 mittels zwei auseinandernehmbaren Ringhälften 22a, 22b arretiert. Der Foliensack 8 befindet sich teilweise noch in einer schlauchförmigen Hülle 7, welche mit ihrem oberen Ende an einem Knopf 17 befestigt ist, der sich an der Druckgas-Armatur 18 befindet.

Figur 11 zeigt den Zustand, bei dem Bier über die Leitung 2o und die Armatur 19 durch den Anschlußstutzen 5 in den Foliensack 8 unter Druck eingefüllt wird. Der Foliensack 8 zieht sich dadurch sukzessive aus der Hülle 7 heraus. Die Hülle 7 hat die Aufgabe, zu verhindern, daß der Foliensack an der Innenwand des Drucktanks 15 Falten bildet, auf denen das Gewicht des eingefüllten Bieres 16 lastet,so daß ein Entfalten verhindert wird.

Wenn in Figur 11 der Foliensack 8 vollständig mit Bier gefüllt ist, so füllt das Bier 16 den Innenraum des Drucktanks 15 vollständig oder nahezu vollständig aus, ohne daß das Bier 16 mit der Innenwandung des Drucktanks 15 in Berührung kommt. Die Entnahme von Bier 16 aus dem Drucktank erfolgt wiederum, wie angedeutet, über die Armatur 19. Dabei sorgt in die Armatur 18 eingeführtes Druckgas dafür, daß das gezapfte Bier stets unter gleichbleibendem Druck entnommen werden kann.

Die Herstellung eines doppelwandigen Foliensackes soll nunmehr anhand der Figuren 1 bis 1o beschrieben werden. Gemäß Figur 1 ist auf einer Vorratsrolle 1 ein flachgelegter Kunststoffolien-Schlauch 2 aufgewickelt. Ein Stück des Folienschlauches 2 wird von der Vorratsrolle 1 abgezogen. Die untere Bahn des flachgelegten Schlauches 2 ist mit 2a und die obere Bahn mit 2b bezeichnet. Etwa im mittleren Bereich des abgezogenen Folienschlauch-Abschnittes wird mittels einer Stanze 4 ein Loch eingestanzt. Gleichzeitig oder danach wird der abgezogene Folienschlauch-Abschnitt mittels einer nur schematisch angedeuteten Schneidvorrichtung 3 von dem noch auf der Vorratsrolle 1 befindlichen flachgelegten Folienschlauch 2 abgetrennt. Ebenfalls gleichzeitig oder danach wird in das durch die Stanzvorrichtung 4 in die beiden Folienbahnen 2a, 2b eingebrachte Loch der Einfüllstutzen 5 so eingesetzt, daß er den Randbereich des Loches dicht abschließt. Dann wird gemäß Figur 3 von der Vorratsrolle 1 ein weiterer Abschnitt des Folienschlauches 2 abgezogen und über den vorher abgezogenen Abschnitt gelegt. In Figur 3 ist die untere Folienbahn des weiteren abgezogenen Abschnittes mit 2c und die obere Folienbahn mit 2d bezeichnet.

Mit 24 ist in Figur 3 eine kreisringförmige Schweißvorrichtung bezeichnet, welche auf die übereinanderliegenden Folienbahnen 2a, 2b, 2c, 2d abgesenkt wird, so daß eine in sich geschlossene ringförmige Schweißnaht entsteht. Gleichzeitig werden aus den übereinanderliegenden Folienbahnen durch einen nächst der Schweißnaht außerhalb des von ihr eingeschlossenen Bereiches geführten Schnitt entsprechende Folienstücke herausgeschnitten, die übereinanderliegen und durch die Schweißnaht miteinander verbunden sind. Das Ausschneiden kann gleichzeitig durch die Schweißvorrichtung 24 erfolgen. Schließlich wird mit der Schneidvorrichtung 3 der noch an der Vorratsrolle 1 hängende Folienschlauch 2 von dem übrigen Teil getrennt.

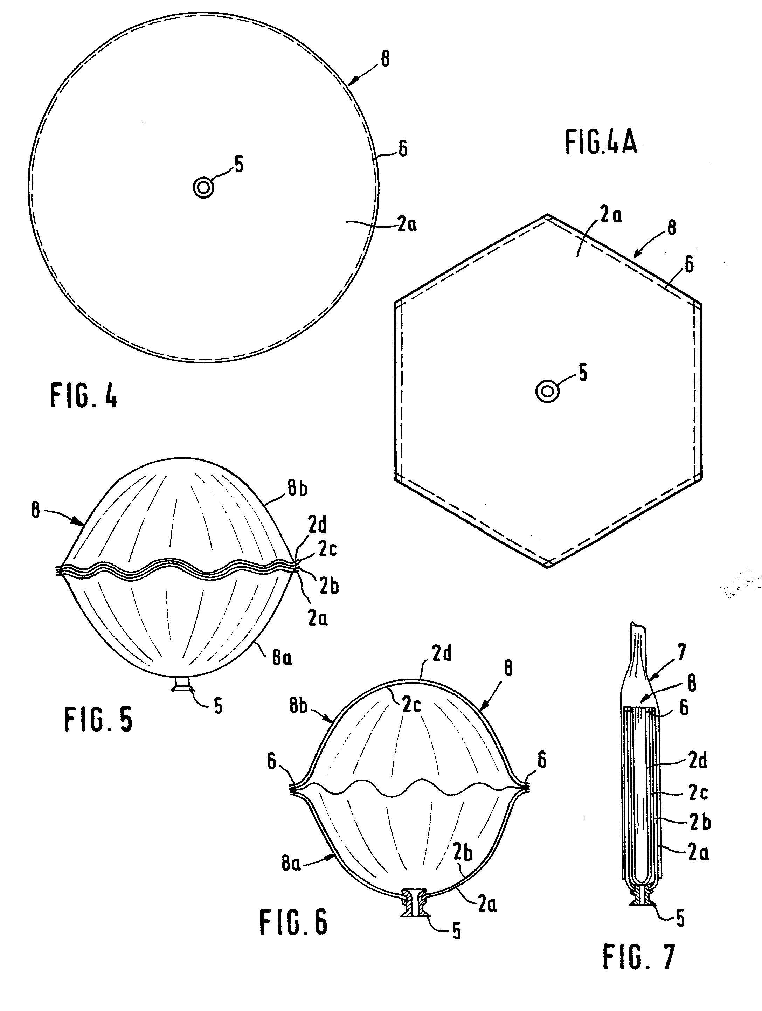

Figur 4 zeigt den so fertiggestellten Foliensack 8 von unten, wobei man auf den Einfüllstutzen 5 schaut. Ferner sichtbar ist das unterste Folienstück 2a. Die in strichpunktierten Linien angedeutete Schweißnaht ist mit 6 bezeichnet. Gemäß Figur 4a können die Folienstücke auch polygonförmig, im vorliegenden Fall sechseckig sein.

Wenn das in Figur 4 noch flache und ebene Gebilde beispielsweise durch Einblasen von Luft in den Anschlußstutzen 5 aufgeblasen wird, so entsteht ein kugelartiger Ballon, wie er in Figur 5 dargestellt ist. Dieser den Foliensack 8 bildende Ballon besteht aus zwei Foliensack-Hälften 8a und 8b.

In Figur 6 ist ein Schnitt durch den in Figur 5 gezeigten aufgeblähten Foliensack 8 gezeigt. Man erkennt, daß die untere Foliensack-Hälfte 8a den Einfüllstutzen 5 enthält und von den beiden Folienstücken 2a, 2b gebildet ist, während die obere Foliensack-Hälfte 8b von den Folienstücken 2c, 2d gebildet ist. Man erkennt ferner, daß die Folienstücke 2a, 2b, 2c, 2d durch die Schweißnaht 6 miteinander verbunden sind.

Die kritischen Stellen für die Dichtheit sind die Schweißnaht 6 und der Verbindungsbereich zwischen dem Anschlußstutzen 5 sowie der unteren Foliensack-Hälfte 8a. Zur Prüfung der Dichtheit dieser Bereiche ist gemäß den Figuren 9 und 1o mit dem Anschlußstutzen 5 ein Kompressor 11 über ein Rückschlagventil 12 und eine Leitung 14 verbunden. Mit der Leitung 14 ist ferner ein Manometer 13 verbunden. Das Aufblähen des gesamten Füllsackes 8 sowie das darauffolgend notwendig werdende Entlüften würde unnötige Zeit erfordern. Um diese Zeit zu sparen, ist der Foliensack 8 mit einem Gewicht 9 belastet, welches konzentrisch auf dem flachgelegten kreisförmigen Foliensack 8 aufgelegt ist und einen ringförmigen Randbereich nächst der Schweißnaht 6 frei läßt. Außerdem läßt das Gewicht einen schmalen Zuführkanal 1o frei, der von dem den Anschlußstutzen 5 umgebenden Zentrum zu dem ringförmigen Randbereich führt. Die von dem Kompressor 11 kommende Druckluft kann durch den Anschlußstutzen 5 über den Verbindungskanal 11 in den ringförmigen Randbereich strömen und diesen aufblähen. Der übrige Bereich des Foliensackes 8 bleibt flach. Mit dem Manometer 13 kann nun festgestellt werden, ob und welcher Druckabfall in einer vorgegebenenZeitspanne auftritt. Dieser Druckabfall ist ein Maß für die Dichtheit der Schweißnaht 6 bzw. der Verbindung zwischen Anschlußstutzen 5 und der unteren Foliensack-Hälfte 8a.

Nachdem der Foliensack 8 auf seine Dichtheit geprüft worden ist, wird er gemäß Figur 7 nach Art eines

0098322

Schirmes zusammengefaltet, derart, daß die Folien-sack-Hälfte, (8b) die den Anschlußstutzen 5 nicht enthält, in die den Anschlußstutzen 5 enthaltene Foliensack-Hälfte 8a hinein-geklappt wird. In Figur 7 erkennt man dies durch die Anordnung der Folienstücke 2a, 2b, 2c und 2d. Der Äquatorbereich mit der Schweißnaht 6 befindet sich oben. Der so zusammengefaltete Foliensack 8 bildet ein über seine Länge gleichmäßig dickes Paket, das in die Hülle 7 eingeführt wird. Die Art der Füllung und des Herausziehens des Foliensackes 8 aus der Hülle 7 kann man aus der bereits erläuterten Figur 11 entnehmen.

Die Herstellung des vierfachwandigen Foliensackes erfolgt völlig analog zu der Herstellung des doppel-wandigen Foliensackes.

ANSPRÜCHE

1) Foliensack, vorzugsweise aus Kunststoff, für die Aufnahme einer Flüssigkeit,insbesondere Bier, innerhalb eines Drucktanks, dadurch gekennzeichnet, daß der Foliensack (8) aus mindestens zwei flachen scheibenförmigen Folienstücken (2a, 2b, 2c, 2d) besteht, die am Rand vorzugsweise durch Schweißen miteinander verbunden sind.

2) Foliensack nach Anspruch 1 mit einer doppelten Folienwandung, dadurch gekennzeichnet, daß er aus vier oder acht flachen scheibenförmigen Folienstücken (2a,2b,2c,2d) besteht, die am Rand vorzugsweise durch Schweißen miteinander verbunden sind.

3) Foliensack nach Anspruch 1 oder 2, dadurch gekennzeichnet, daß insbesondere für einen kugelförmigen Drucktank die scheibenförmigen Folienstücke (2a,2b,2c, 2d) kreisrund oder polygonförmig sind.

4) Foliensack nach einem der vorhergehenden Ansprüche, mit einem Anschlußstutzen (5), dadurch gekennzeichnet, daß der Anschlußstutzen (5) etwa in der Mitte oder im mittleren Bereich des einen Folienstückes bzw. der zur Bildung der einen Foliensack-Hälfte (8a) zusammengehörenden Folienstücke (2a,2b,2c,2d)angeordnet ist.

0098322

5) Mehrlagiger Kunststoffolien-Sack zur Aufnahme einer Flüssigkeit, insbesondere Bier, innerhalb eines kugelförmigen Drucktanks (15), mit einem Anschlußstutzen (5), der das Folienmaterial durchgreift, dadurch gekennzeichnet, daß der Foliensack (8) aus aufeinandergelegten kreisförmigen flachen Folienstücken (2a, 2b, 2c, 2d) besteht, die am Rand miteinander verschweißt sind, und daß der Anschlußstutzen (5) etwa im Zentrum der die eine Foliensack-Hälfte (8b) bildenden Folienstücke (2a,2b,2c,2d) angeordnet ist.

6) Foliensack nacheinem der Ansprüche 1 bis 5, dadurch gekennzeichnet, daß er schirmartig zusammengefaltet ist, derart, daß die nicht mit dem Anschlußstutzen (5) versehene Foliensack-Hälfte (8b) in die mit dem Anschlußstutzen (5) versehene Foliensack-Hälfte (8a) eingelegt wird, und daß der so zusammengelegte Foliensack (8) von einer schlauchförmigen Hülle (7) umgeben ist.

7) Verfahren zur Herstellung eines doppelwandigen Foliensackes (8) nach Anspruch 2, dadurch gekennzeichnet, daß die zwei je eine Foliensack-Hälfte (8a) bildenden flachen scheibenförmigen Folienstücke (2a,2b) aus einem handelsmäßig verfügbaren flachgelegten Folienschlauch (2) ausgeschnitten bzw. ausgestanzt werden, und daß die zwei die andere Foliensack-Hälfte (8b) bildenden auf die gleiche Weise gewonnenen flachen scheibenförmigen Folienstücke (2c,2d) auf die erstgenannten Folienstücke (2a,2b) aufgelegt und mit diesen am Rand verschweißt werden.

8) Verfahren zur Herstellung eines vierfachwandigen Foliensackes (8) nach Anspruch 2, dadurch gekennzeichnet, daß die vier je eine Foliensack-Hälfte (8b) bildenden flachen scheibenförmigen Folienstücke aus zwei übereinandergelegten Lagen eines handelsmäßig verfügbaren flachgelegten Folienschlauches (2) ausgeschnitten bzw. ausgestanzt werden, daß die vier die andere Foliensack-Hälfte (8b) bildenden auf die gleiche Weise gewonnenen flachen scheibenförmigen Folienstücke auf die erstgenannten Folienstücke aufgelegt und mit diesen am Rand verschweißt werden.

9) Verfahren zur Herstellung eines Foliensackes nach Anspruch 5, gekennzeichnet durch folgende Schritte:

a) zunächst wird von einem Folienspeicher, vorzugsweise einer Rolle (1), auf der eine Einzelfolie, eine Doppelfolie oder einflachgelegter Folienschlauch (2) aufgewickelt ist, zweifach übereinandergelegter Abschnitt der Einzelfolie oder ein Abschnitt der Doppelfolie oder des Folienschlauches (2) abgezogen,

b) dann wird im mittleren Bereich des abgezogenen Abschnittes ein Loch vorzugsweise durch Stanzen eingebracht,

c) dann wird der Anschlußstutzen (5) am Lochbereich des abgezogenen Abschnittes befestigt,

d) nach Schritt a), b) oder c) oder gleichzeitig mit Schritt b) oder c) wird der abgezogene Abschnitt abgetrennt,

e) dann wird unter Wiederholung von Schritt a) ein weiterer Abschnitt von dem Folienspeicher bzw. der Rolle (1) abgezogen,

f) dann wird dieser weitere abgezogene Abschnitt mit dem bereits vorher abgezogenen Abschnitt entlang einer den Umfang der flachen scheibenförmigen Folienstücke (2a,2b,2c,2d) definierenden geschlossenen Kreiskurve verschweißt,

g) gleichzeitig oder danach werden die flachen scheibenförmigen Folienstücke (2a,2b,2c,2d) aus den abgezogenen Abschnitten durch einen nächst der Schweißlinie (6) verlaufenden Schnitt herausgeschnitten.

1o) Verfahren zur Herstellung eines Foliensackes nach Anspruch 6, gekennzeichnet durch folgende Schritte:

a) zunächst wird von einem Folienschlauch, vorzugsweise einer Rolle (1), auf der eine Einzelfolie, eine Doppelfolie, ein Folienschlauch oder eine Vierfachfolie aufgewickelt ist, ein vierfach übereinander gelegter Abschnitt der Einzelfolie, ein zweifach übereinandergelegter Abschnitt der Doppelfolie oder des Folienschlauches oder ein Abschnitt der Vierfachfolie abgezogen,

b) dann wird im mittleren Bereich des abgezogenen Abschnittes ein Loch vorzugsweise durch Stanzen eingebracht,

c) dann wird der Anschlußstutzen (5) am Lochbereich des abgezogenen Abschnittes befestigt,

d) nach Schritt a), b) oder c) oder gleichzeitig mit Schritt b) oder c) wird der abgezogene Abschnitt abgetrennt,

e) dann wird unter Wiederholung von Schritt a) ein weiterer Abschnitt von dem Folienspeicher bzw. der Rolle (1) abgezogen,

f) dann wird dieser weitere abgezogene Abschnitt mit dem bereits vorher abgezogenen Abschnitt entlang einer den Umfang der flachen scheibenförmigen Folienstücke definierenden geschlossenen Kreiskurve verschweißt,

g) gleichzeitig oder danach werden die flachen scheibenförmigen Folienstücke aus den abgezogenen Abschnitten durch einen nächst der Schweißlinie (6) verlaufenden Schnitt herausgeschnitten.

11) Verfahren nach Anspruch 9 oder 1o, dadurch gekennzeichnet, daß nach Schritt e) oder f) oder g) oder gleichzeitig mit Schritt f) oder g) der weitere abgezogene Abschnitt abgetrennt wird.

12) Verfahren nach einem der Ansprüche 7 bis 11, dadurch gekennzeichnet, daß der fertige Foliensack (8) auf seine Dichtigkeit geprüft wird.

13) Verfahren nach Anspruch 12, dadurchgekennzeichnet, daß der Foliensack (8) zwecks Prüfung auf seine Dichtigkeit nur an seinem nächst der Schweißnaht (6) verlaufenden ringförmigen Randbereich mit Druckluft aufgeblasen wird.

14) Verfahren nach Anspruch 13, dadurch gekennzeichnet, daß der mittlere Bereich des Foliensackes (8) bis auf mindestens einen von dem etwa in der Mitte gelegenen Anschlußstutzen zu dem ringförmigen Randbereich verlaufenden kanalartigen Verbindungsbereich während des Aufblasens zusammengepreßt wird.

0098322

15) Verfahren nach einem der Ansprüche 12 bis 15, dadurch gekennzeichnet, daß der druckgeprüfte Foliensack (8) in leeren Zustand schirmartig gefaltet wird, wobei die nicht mit dem Anschlußstutzen (5) versehene Foliensack-Hälfte (8b) in die mit dem Anschlußstutzen (5) versehene Foliensack-Hälfte (8a) eingelegt wird, und daß der so zusammengelegte Foliensack (8) in eine schlauchförmige Hülle (7) eingeführt wird.

FIG. 1

FIG. 2

FIG. 3

0098322

FIG.4A

5

FIG. 4

8b
8
2d
2c
2b
2a
8a
5
FIG. 5

2a
8
6
5

2d
2c
8
8b
2c
6
6
8a
2b
2a
5
FIG.6

7
8
6
2d
2c
2b
2a
5
FIG. 7

FIG. 8

FIG. 9

FIG. 10

FIG. 11

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,Y | WO-A-7 900 093 (BIER-DRIVE) <br><br> * Seite 3, Zeile 18 - Seite 5, Zeile 18; Figuren * <br><br> --- | 1-5,9-11 | B 65 D 25/16 <br> B 65 D 88/62 <br> B 67 D 1/04 <br> B 31 B 39/90 |
| Y | US-A-2 991 815 (PFEIFFER) <br><br> * Spalte 3, Zeilen 44-53; Spalte 6, Zeilen 2-40; Figuren 1-8 * <br><br> --- | 1-5,6, 15 | |
| Y | US-A-2 946 494 (KUSS) <br><br> * Spalte 2, Zeilen 21-41; Figur 1 * <br><br> --- | 1,2,9-11 | |
| Y | FR-A-1 548 386 (MECAPLAST) <br> * Insgesamt * <br><br> --- | 6,15 | |
| A | DE-A-1 940 404 (HERKULES PAPIERSACKFABRIKEN BRUNSTERMANN) <br> * Seite 10, Zeile 18 - Seite 11, Zeile 13; Figuren 1-6 * <br><br> --- | 7,8 | RECHERCHIERTE SACHGEBIETE (Int. Cl. ³) <br><br> B 65 D <br> B 67 D <br> B 31 B <br> B 29 C |
| A | CH-A- 420 586 (LESCHUS) <br> * Insgesamt * <br><br> --- | 12,13 | |
| A | BE-A- 740 323 (DODFLINO) <br><br> --- | | |
| A | FR-A-1 043 209 (COFFINET) <br><br> --- -/- | | |

Der vorliegende Recherchenbericht wurde für alle Patentansprüche erstellt.

| Recherchenort <br> DEN HAAG | Abschlußdatum der Recherche <br> 09-03-1983 | Prüfer <br> MARTENS L.G.R. |
|---|---|---|

Europäisches
Patentamt

**EUROPÄISCHER RECHERCHENBERICHT**

0098322

Nummer der Anmeldung

EP 82 10 6081

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | FR-A-2 310 280 (NILSON) | | |

-----

RECHERCHIERTE
SACHGEBIETE (Int. Cl. ³)

Der vorliegende Recherchenbericht wurde für alle Patentansprüche erstellt.

| Recherchenort DEN HAAG | Abschlußdatum der Recherche 09-03-1983 | Prüfer MARTENS L.G.R. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503. 03.82